# EUROPÄISCHE PATENTSCHRIFT

(11) **EP 1 258 648 B1**
(45) Veröffentlichungstag und Bekanntmachung des Hinweises auf die Patenterteilung: **28.11.2007**
(21) Anmeldenummer: 02007813.5
(22) Anmeldetag: 08.04.2002
(51) Int. Cl.: F16D 65/12

(54) **Bremsscheibe**
Brake disc
Disque de frein

(30) Priorität: 19.04.2001 DE 10119150
(43) Veröffentlichungstag der Anmeldung: 20.11.2002
(73) Patentinhaber: ROBERT BOSCH GMBH, 70442 Stuttgart (DE); Lucas Automotive GmbH, 56070 Koblenz (DE)
(72) Erfinder: Müller, Hans-Walter, 35644 Hohenahr (DE); Müller, Jörn, 35713 Eschenburg (DE); Becker, Marco, 56746 Kempenich (DE); Gross, Armin, 56076 Koblenz (DE); Seuser, Ulrich, Dr., 56566 Neuwied (DE)

(56) Entgegenhaltungen:
- EP-A- 0 293 896
- WO-A-91/10840
- DE-A- 2 358 140
- DE-A- 4 233 525
- DE-A- 4 308 614
- PATENT ABSTRACTS OF JAPAN Bd. 0175, Nr. 58 (M-1493), 7. Oktober 1993 (1993-10-07) -& JP 05 157134 A (TOYOTA MOTOR CORP), 22. Juni 1993 (1993-06-22)

## Beschreibung

Die Erfindung betrifft eine Bremsscheibe nach dem Oberbegriff des Patentanspruches 1.

Innenbelüftete Bremsscheiben aus Gusseisen werden bei Scheibenbremsen von Fahrzeugen eingesetzt. Sie bestehen aus einem Scheibentopf sowie zwei über Verbindungsbereiche miteinander und/oder mit dem Scheibentopf verbundenen Reibringscheiben. Zwischen den Verbindungsbereichen, welche in Form von Stegen oder auch punktförmig ausgeführt sein können, sind Belüftungskanäle angeordnet.

Bremsscheiben können sich durch die Einflüsse von Kraft und Temperatur unter den Belastungen beim Bremsvorgang verformen. Dies führt zu Komforteinbußen im Fahrzeug durch auftretende Brummgeräusche oder Rubbeln. Daher soll die Temperaturverteilung im Bereich der Reibflächen möglichst gleichmäßig sein.

Probleme kann beim Bremsvorgang die Verformung der beiden Reibringscheiben einer Bremsscheibe bereiten. Insbesondere Schirmung und Wellenbildung sind dabei kritisch. Die Temperaturverteilung auf den Reibringscheiben ist dann nicht mehr gleichmäßig, so dass sich durch den Angriff der Bremsbeläge auf den entstehenden Wellenbergen heiße Stellen ausbilden. Bei relativ dicken Reibringscheiben liegen sich diese Stellen auf den beiden Reibflächen gegenüber, wogegen bei relativ dünnen Reibringscheiben häufig ein Versatz der Wellenberge festzustellen ist. Als Folge dieser örtlichen Überhitzung ist eine deutlich schlechtere Bremswirkung festzustellen, insbesondere weil sich an den heißen Stellen großflächig ein martensitisches Gefüge mit größerer Härte bilden kann, über das der Bremsbelag rutscht. Außerdem können ungleichmäßige Auswaschungen in den Wellentälern auf den Reibflächen entstehen.

In der EP 0 412 541 B1 ist diese Problematik, welche zusätzlich durch eine relativ langgestreckte Bremsbackenform in Umfangsrichtung verstärkt wird, beschrieben. Dabei soll den örtlichen Überhitzungen mit Gefügeveränderungen durch eine versetzte Anordnung der Bremsbacken in Umfangsrichtung entgegengewirkt werden. Aus der DE 37 18 647 C1 ist eine massive Bremsscheibe mit gehärteten Reibflächen bekannt. Die Reibflächen weisen auf beiden Seiten durch Induktions-, Elektronenstrahl- oder Laserstrahlhärten gehärtete Oberflächen-Teilbereiche auf. Dabei sind die einander gegenüber liegenden Flächen-Teilbereiche wechselseitig zueinander versetzt, und das Verhältnis von gehärteten zu ungehärteten Oberflächen-Teilbereichen ist ungleich.

Weiterhin enthält die DE 24 50 151 A1 eine Bremsscheibe mit zwei Reibringen und einem über Rippen verbundenen Mittelring. Jeder Reibring ist mit radial verlaufenden Schlitzen unterbrochen, welche versetzt zueinander angeordnet sind. Über Gummibuchsen sind die Segmente der Reibringe dabei an die zentrale Nabe angebunden. Eine ähnliche Gestaltung besitzt die massive Bremsscheibe aus Gusseisen gemäß DE 196 38 187 C2. Allerdings sind dabei die Reibf!ächen mit radialen Nuten versehen, um das Bremsenquietschen zu vermeiden. Im Gegensatz dazu zeigt die DE 195 12 934 A1 zumindest teilweise in Umfangsrichtung orientierte Nuten als Verschleißanzeige auf den Reibflächen einer Bremsscheibe.

Eine gattungsgemäße innenbelüftete Bremsscheibe ist in der DE 24 58 048 A1 enthalten. Dabei befinden sich im wesentlichen radial ausgerichtete Rillen auf den Reibflächen jeweils zwischen Kühlkanälen, um eine annähernd gleiche Wanddicke sicherzustellen. Die DE 42 33 525 C2 offenbart eine innenbelüftete Bremsscheibe, bei der ein wellenförmig verlaufender Anbindungskranz, ohne Anschluss an die Verbindungsstege, ringförmig zwischen dem Scheibentopf und den beiden Reibringscheiben verläuft. Zum Erzielen ausreichend langer Verbindungsquerschnitte auf der Ebene der Scheiben sind die Wellenscheitel abgeflacht und gehen in diese über.

Die JP 05157134 A (Patent Abstracts of Japan Bd. 0175, Nr. 58 (M-1493), 7.10.1993) zeigt einen Bremsrotor mit einem durch Laserstrahlen erzeugten Gefüge in Teilbereichen der Reibfläche, welches vom Gefüge des Grundkörpers abweicht. Diese Gefügeumwandlung wird ausschließlich bei der Herstellung bewirkt. Es wird von einer Reibfläche mit einheitlicher Dicke ausgegangen.

In der WO 91/10840 A werden Bremsscheiben beschrieben, deren Oberflächen z. B. durch Einsatzhärten gehärtet werden. Hier weisen die Reibungsflächen eine einheitliche Verteilung der Härte an der Oberfläche auf. Es sind keine Bereiche unterschiedlicher Gefüge an der Oberfläche erkennbar.

Bei der Anordnung nach der DE 4308614 A besteht die topfförmige Nabe aus einem ersten Material mit höherer Festigkeit und die Bremsscheibe aus einem Material mit besserer Wärmeleitfähigkeit. Die Bremsscheibe und somit die eigentliche Reibfläche besteht aus einem einheitlichen Material.

Bei der Bremsscheibe nach der DE 4233525 A ist der ringförmige Anbindungskranz zwischen dem Bremstopf und den Bremsscheiben mit einer Welle verbunden. Diese Welle ragt aber nicht bis zur Oberfläche. Ferner ist der Reibungsbereich der Bremsscheibe einheitlich ausgebildet.

Der Erfindung liegt die Aufgabe zugrunde, insbesondere bei innenbelüfteten Bremsscheiben aus Gusseisen für Scheibenbremsen von Fahrzeugen das Temperatur- und Verformungsverhalten zu optimieren.

Erfindungsgemäß wurde dies mit den Merkmalen des Patentanspruches 1 gelöst. Vorteilhafte Weiterbildungen sind den Unteransprüchen zu entnehmen.

Die Reibflächen der beiden Reibringscheiben sind in Teilbereiche mit unterschiedlichen Gefügen aufgegliedert. Diese Zonen entstehen auf den Reibflächen der beiden Reibringscheiben als Erstarrungsgefüge beim Gießvorgang und werden durch die Gestaltung der Verbindungsbereiche und der Belüftungskanäle in ihrer Form und Lage beeinflusst. Die Teilbereiche mit martensitischem Gefüge auf den Reibflächen werden durch Materialaussparungen in den beiden Reibringscheiben auf der Seite der Belüftungskanäle erzeugt, indem die dicke des Reibringes in den Teilbereichen vermindert wird. Die Teilbereiche mit unterschiedlichen Gefügen auf den Reibflächen der beiden Reibringscheiben können durch Wärmebehandlung erzeugt werden. Dabei kann die Gestaltung der Verbindungsbereiche und der Belüftungskanäle zusätzlichen Einfluss auf Form und Lage der Teilbereiche nehmen. Bei einer dritten Variante entstehen die Teilbereiche mit unterschiedlichen Gefügen auf den Reibflächen der beiden Reibringscheiben durch Wärmebeaufschlagung im Betrieb. Hier müssen die Verbindungsbereiche und Belüftungskanäle so gestaltet sein, dass an den gewünschten Stellen die richtige Temperatur für die entsprechende Gefügeumwandlung vorliegt. Ziel der Erfindung ist es, dass auf den Reibflächen der beiden Reibringscheiben ein Netz aus Teilbereichen mit martensitischem Gefüge erzeugt wird. Die Abstände zwischen den einzelnen Teilbereichen mit martensitischem Gefüge und/oder deren Erstreckung auf einer Reibfläche sind so gewählt, dass ein Bremsbelag auf diesen Teilbereichen gleitet.

Alternativ zum Ausformen in einem Vorgang können die Teilbereiche mit unterschiedlichen Gefügen auf den Reibflächen der beiden Reibringscheiben als Erstarrungsgefüge bei zwei aufeinander folgenden Gießvorgängen entstehen, wenn im ersten Gießvorgang ein Grundkörper mit martensitischem Gefüge hergestellt und im zweiten Gießvorgang die übrigen Bereiche der Reibringscheiben formschlüssig daran angegossen werden. Weiterhin kann im Bereich der Reibflächen der beiden Reibringscheiben je mindestens ein ringförmiger Körper mit martensitischem Gefüge eingegossen sein.

Zusätzlich können die Teilbereiche mit martensitischem Gefüge auf den Reibflächen der beiden Reibringscheiben durch mindestens in Teilbereichen wirksame Umschmelzverfahren erzeugt werden. Mit Laser-, Flammen-, Induktions- oder Funkenerosionsverfahren wird externe Energie beispielsweise nach der mechanischen Bearbeitung einer Bremsscheibe punktuell eingebracht. Die Teilbereiche mit martensitischem Gefüge auf den Reibflächen der beiden Reibringscheiben können auch durch mindestens ein in Teilbereichen in den Reibringscheiben eingegossenes Blech und/oder Drahtgewebe erzeugt werden. Damit wird das Abkühlverhalten der Bremsscheibe in der Gießform von innen heraus genau beeinflusst. Es ist für den Kontakt innerhalb der Reibringscheiben günstig, wenn das mindestens eine eingegossene Blech Abkantungen und/oder Durchstellungen aufweist und am Kern fixiert ist. Durchbrechungen des eingegossenen Bleches und/oder Drahtgewebes korrespondieren vorzugsweise mit freien Querschnitten in den Belüftungskanälen und sind außerhalb der Verbindungsbereiche angeordnet, weil sich besonders in den Verbindungszonen mit Rippen und Stegen Materialanhäufungen befinden. Die an diesen Stellen möglichen Temperaturspitzen werden dann mit der kühlenden Einlage abgebaut.

An diesen Stel-len kühlt das Gusseisen in der Gießform oder bei ersten Temperaturspitzen im Betrieb rasch ab, so dass sich Martensit bildet. Generell sind mit der entsprechenden Gestaltung des Kerns in der Gießform Einflüsse auf die Innengeometrie der Reibringscheiben in vielfältiger Art möglich.

Beispielsweise können die Teilbereiche mit martensitischem Gefüge auf den Reibflächen in Umfangsrichtung verlaufen, wenn mindestens eine Nut in einer Reibringscheibe auf der Seite der Belüftungskanäle eingebracht wird. Dann zieht sich ein dünner Streifen mit martensitischem Gefüge über die Reibfläche. Dessen Verlauf wird unsymmetrisch zum Mittelpunkt der Bremsscheibe, wenn sich die in Umfangsrichtung verlaufende Nut spiralförmig nach außen erweitert. Andererseits können die Teilbereiche mit martensitischem Gefüge auf den Reibflächen strahlenförmig verlaufen. Dann sind mehrere Nuten, welche in radialer Richtung nach außen zeigen, in einer Reibringscheibe auf der Seite der Belüftungskanäle eingebracht.

Vorzugsweise sind die radial verlaufenden Nuten versetzt zueinander auf den beiden Reibringscheiben angebracht. Es ist dadurch in Umfangsrichtung ein wellenförmiger Kraftverlauf über die Verbindungsbereiche sichergestellt und es entstehen jeweils Segmente zwischen den Nuten bzw. Bereichen mit geringer Dicke auf den beiden Reibringscheiben. Daher ist es günstig, wenn diese Ausführungsform vorzugsweise mit einer bekannten, wellenförmig verlaufenden Anbindung der Reibringscheiben an den Scheibentopf kombiniert ist. Dabei sind die Wellenscheitel abwechselnd mit einer der Reibringscheiben verbunden. Sie sind auf der Ebene der Reibringscheiben abgeflacht und gehen etwa mit deren Wandstärke in diese über. Selbst bei einer in Teilbereichen durch die erfindungsgemäßen Maßnahmen reduzierten Dicke der beiden Reibringscheiben bleibt die äußere Gestalt der Bremsscheibe erhalten, weil die beiden Reibringscheiben über die wellenförmige Anbindung zusammen gehalten werden. Zudem wird das Verhalten der Bremsscheibe im Zusammenhang mit Schirmung und Welligkeit dadurch positiv beeinflusst.

Bei allen Varianten kann die Tiefe einer Nut über deren Verlauf bzw. die Dicke des Reibringes im Bereich der Nut variabel sein. Somit kann das Verformungsverhalten der Bremsscheibe auf einfache Art und Weise bei der Herstellung über die Kerngestaltung berücksichtigt werden. Dies trifft auch auf die Bildung von Teilbereichen mit martensitischem Gefüge auf den Reibflächen durch Materialaussparungen in den beiden Reibringscheiben, in Kombination mit Materialanhäufungen in den Verbindungsbereichen, zu. Dabei wird die Wärmeabfuhr bzw. das Abkühlverhalten gezielt durch die Gestaltung beeinflusst.

Durch die erfindungsgemäße Gestaltung verbessert sich das Temperatur- und Verformungsverhalten bei innenbelüfteten Bremsscheiben aus Gusseisen für Scheibenbremsen von Fahrzeugen. Die Bremsscheibe wird mit einfachen Maßnahmen so modifiziert, dass sich beim Gießprozess oder bei den ersten hohen thermischen Belastungen im Betrieb in Teilbereichen das gewünschte Gefüge einstellt. Durch die Fugen bzw. Einschnitte in den Reibringscheiben fallen Schirmung und Welligkeit der Bremsscheibe gegenüber dem herkömmlichen Aufbau deutlich geringer aus. Selbst bei einem möglichen Bruch im Nutbereich mit der reduzierten Dicke ist die Abstützung der beiden Reibringscheiben weiterhin gewährleistet, weil Umfangskräfte wellenförmig über Anbindung und Verbindungsbereiche übertragen werden und zudem die feinen Strukturen gegenüber liegender Bruchflächen ineinander greifen.

Im Vergleich zu bekannten Ausführungsformen ist bei der erfindungsgemäßen Bremsscheibe keine spezielle mechanische Bearbeitung zur Verbesserung der Betriebseigenschaften notwendig. Auch aufwändige Maßnahmen zum Verhindern der Verformung einer Bremsscheibe, wie zum Beispiel das Anordnen der Bremsbeläge in einem breiteren Umfangsbereich, können entfallen. Die Reibflächen besitzen eine durchgehend glatte Oberfläche, weil die wesentlichen Strukturen im Bereich der Belüftungskanäle auf der Rückseite angebracht sind. Die bewusst erzeugten, vorzugsweise netzartig auf den Reibflächen verteilten Martensitflecken bilden Stützstellen, auf denen der Bremsbelag gleitet. Von den Eigenschaften her bedeutet ein Gefüge aus Martensit eine größere Härte in der entsprechenden Zone des Gusseisens. Martensit entsteht beim raschen Abkühlen von kohlenstoffhaltigem Eisen aus Austenit, wobei durch Zulegieren von geringen Mengen Nickel, Mangan, Chrom, Molybdän oder Wolfram die Auskühlgeschwindigkeit soweit herabgesetzt werden kann, dass bereits bei normaler Abkühlung an der Luft eine Martensitbildung erfolgt.

Die erfindungsgemäße Gestaltung gilt neben dem beschriebenen Gießen der Bremsscheibe aus Grauguss auch für andere Verbundwerkstoffe, wie zum Beispiel mit Leichtmetallen. Anwendbar sind die beschriebenen Merkmale von Reibringscheiben, Verbindungsbereichen und

Anbindung an den Scheibentopf ebenfalls auch auf montierte Bremsscheiben. Neben der Erzeugung von punktuellen Temperaturspitzen kann die erfindungsgemäße Gestaltung auch zum Vergleichmäßigen der Temperaturen bei Herstellung und Betrieb der Bremsscheibe dienen.

Die Zeichnung stellt ein Ausführungsbeispiel der Erfindung dar. Es zeigt:
- Fig. 1:: Ein Segment einer innenbelüfteten Bremsscheibe mit wärmebehandelten Stellen in der Draufsicht,
- Fig. 2:: einen Schnitt in radialer Richtung durch die Reibringscheiben nach Fig. 1,
- Fig. 3:: ein Schnitt auf der Ebene der Belüftungskanäle durch eine innenbelüftete Bremsscheibe mit einer spiralförmigen, in Umfangsrichtung verlaufenden Nut,
- Fig. 4:: einen Schnitt in radialer Richtung durch die Reibringscheiben nach Fig. 3,
- Fig. 5:: ein Segment einer innenbelüfteten Bremsscheibe nach den Fig. 3 und 4 in einer perspektivischen Darstellung,
- Fig. 6:: ein Segment einer innenbelüfteten Bremsscheibe mit radial verlaufenden Nuten in beiden Reibringscheiben in einer perspektivischen Darstellung,
- Fig. 7:: eine Draufsicht auf eine innenbelüftete Bremsscheibe nach Fig. 6 mit einer Darstellung der Geometrie in der Ebene der Belüftungskanäle,
- Fig. 8:: einen Schnitt in radialer Richtung durch die Reibringscheiben nach den Fig. 6 und 7 mit einer wellenförmigen Anbindung an den Scheibentopf,
- Fig. 9:: einen Schnitt in Umfangsrichtung durch die wellenförmige Anbindung nach Fig. 8 und
- Fig. 10:: einen Schnitt in Umfangsrichtung durch die Reibringscheiben nach den Fig. 6 bis 9.

Die Bremsscheibe besteht aus einem Scheibentopf 1 und zwei über im wesentlichen radial verlaufende Verbindungsbereiche 2 mit diesem verbundenen Reibringscheiben 3, 3' mit Reibflächen 4, 4'. Zwischen den Verbindungsbereichen 2, bestehend aus Zapfen und/oder Stegen, sind Belüftungskanäle 5 angeordnet. Erfindungsgemäß sind die Reibflächen 4, 4' der beiden Reibringscheiben 3, 3' in Teilbereiche mit unterschiedlichen Gefügen aufgegliedert. Ein Ziel ist es, dass auf den Reibflächen 3, 3' ein Netz aus Teilbereichen mit martensitischem Gefüge 6 erzeugt wird, auf denen ein Bremsbelag gleitet.

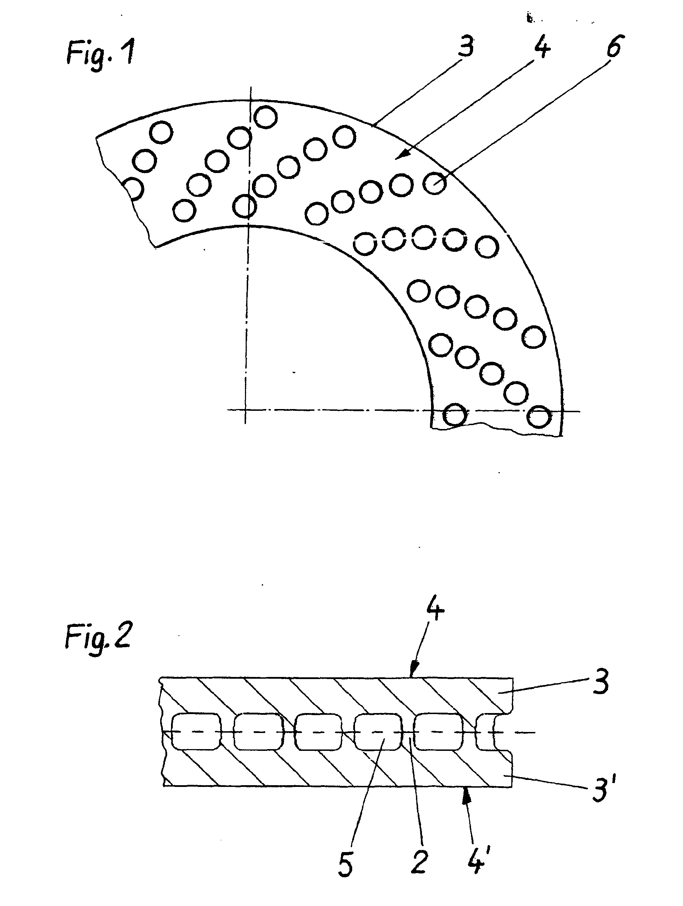

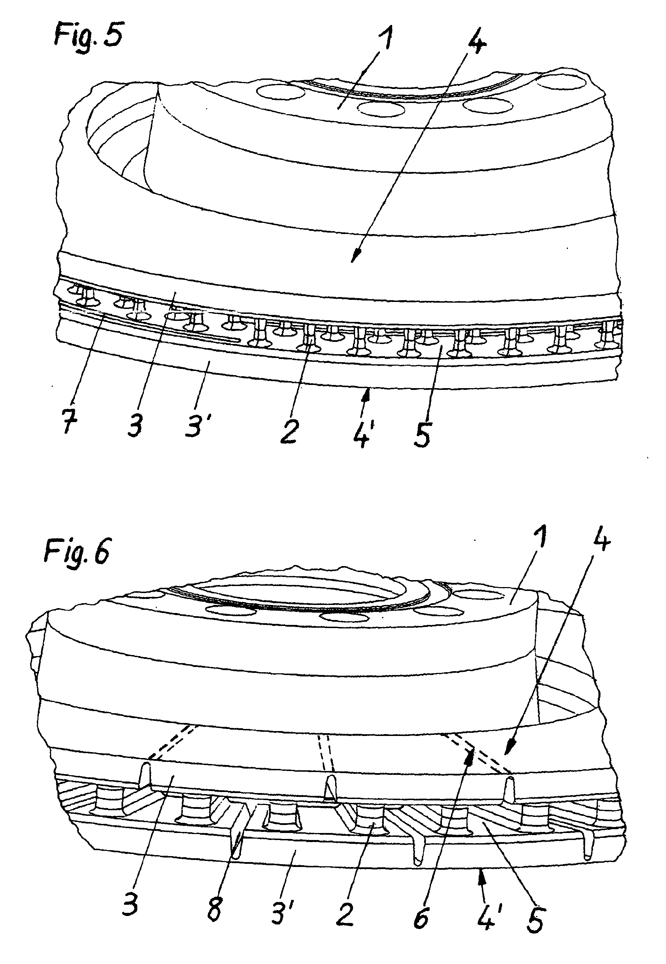

Die Teilbereiche mit martensitischem Gefüge 6 auf den Reibflächen 3, 3' wurden bei der Bremsscheibe nach Fig. 1 durch punktuelle Wärmebehandlung erzeugt. Genauso können diese bereits als Erstarrungsgefüge beim Gießvorgang oder durch Wärmebeaufschlagung im Betrieb entstehen und werden insbesondere durch die Gestaltung der Verbindungsbereiche 2, beispielsweise wie in den Fig. 2 bis 5 als Zapfen, sowie der Belüftungskanäle 5 in ihrer Form und Lage beeinflusst.

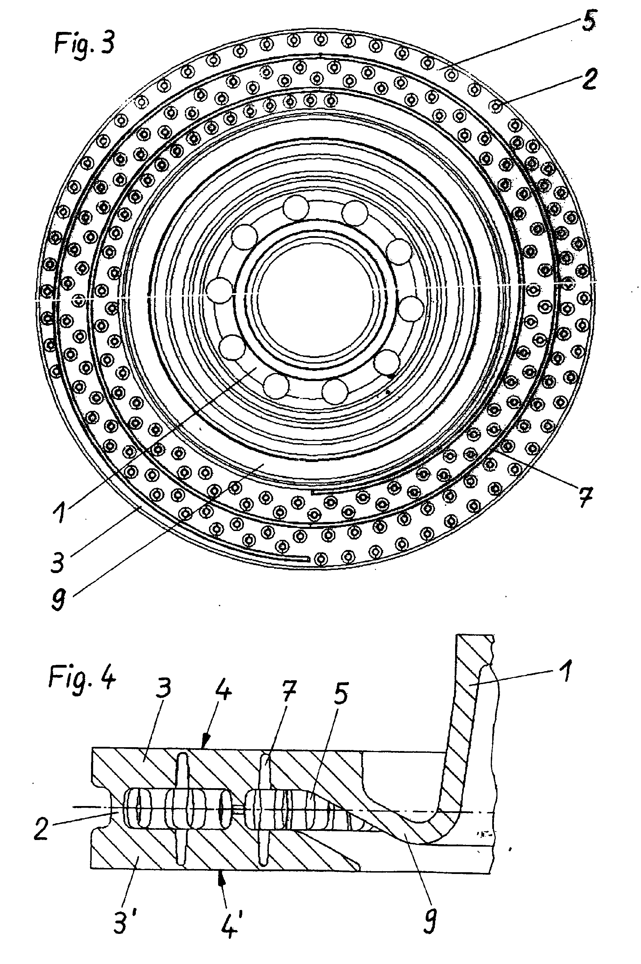

Weiterhin können die Teilbereiche mit martensitischem Gefüge 6 auf den Reibflächen 4, 4' durch Materialaussparungen in den beiden Reibringscheiben 3, 3' auf der Seite der Belüftungskanäle 5 erzeugt werden, indem die Dicke der Reibringscheiben 3, 3' in den Teilbereichen vermindert wird. Dazu kann, wie in den Fig. 3 bis 5 dargestellt, eine Nut 7 in mindestens einer Reibringscheibe 3, 3' erzeugt werden, welche auf der Seite der Belüftungskanäle 5 in Umfangsrichtung verläuft und sich spiralförmig nach außen erweitert.

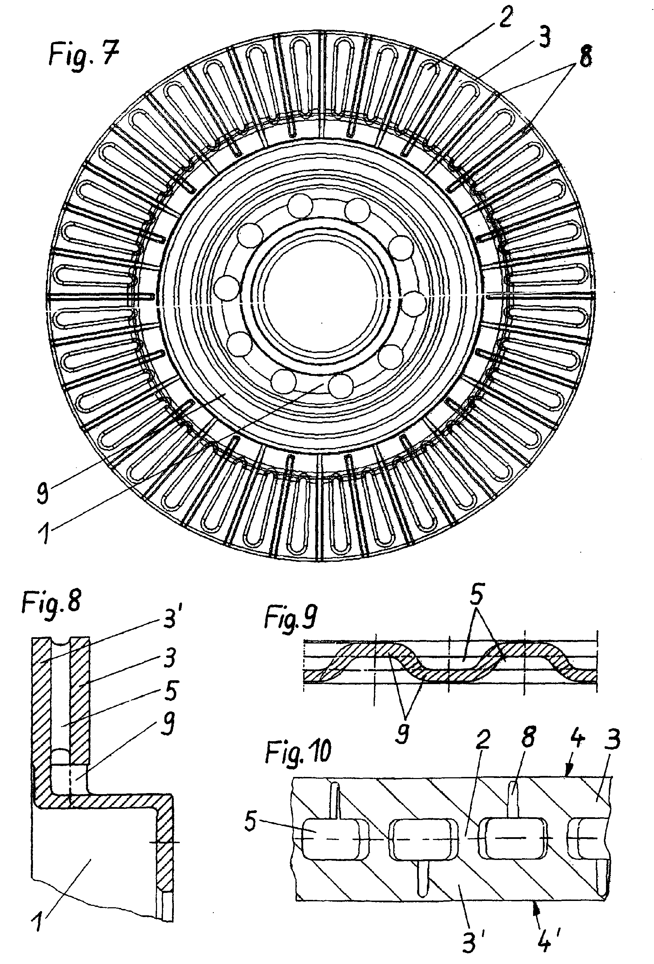

Alternativ zu einer Nut 7 in Umfangsrichtung oder in Kombination damit können die Teilbereiche mit martensitischem Gefüge 6 auf den Reibflächen 4, 4' auch durch mehrere radial verlaufende Nuten 8 auf der Seite der Belüftungskanäle 5 in mindestens einer Reibringscheibe 3, 3' erzeugt werden. Die radial verlaufenden Nuten 8 sind vorzugsweise versetzt zueinander auf den beiden Reibringscheiben 3, 3' angebracht. Dadurch ergibt sich innerhalb der Reibringscheiben 3, 3' ein wellenförmiger Kraftverlauf über die Verbindungsbereiche 2 in Umfangsrichtung. Vorzugsweise werden die Nuten 8 mit einer wellenförmigen Anbindung 9 der Reibringscheiben 3, 3' an den Scheibentopf 1, wie in den Fig. 7, 8 und 9 dargestellt, kombiniert. Dabei sind die Wellenscheitel alternierend mit einer der Reibringscheiben 3, 3' verbunden.

Bei allen Varianten kann aber auch die in Fig. 4 gezeigte einseitige Anbindung 9 einer Reibringscheibe 3, 3' zum Einsatz kommen. Außerdem ist der Verlauf einer Nut 7, 8 sowie deren Tiefe variabel. Beispielsweise sind auch sinus-, wellenförmige oder radial gekrümmte Nuten 7, 8 möglich.

## Patentansprüche

1. Innenbelüftete Bremsscheibe aus Gusseisen für Scheibenbremsen von Fahrzeugen, bestehend aus einem Scheibentopf (1), zwei mit dem Scheibentopf (1) verbundenen Reibringscheiben (3, 3') mit Verbindungsbereichen (2) und dazwischen angeordneten Belüftungskanälen (5), wobei die Reibflächen (4, 4') der beiden Reibringscheiben (3, 3') in Teilbereiche mit unterschiedlichen Gefügen (6) aufgegliedert sind, **dadurch gekennzeichnet, dass** diese Teilbereiche (6) auf den Reibflächen (4, 4') als Erstarrungsgefüge beim Gießvorgang entstehen und durch die Gestaltung der Verbindungsbereiche (2) und der Belüftungskanäle (5) oder durch mindestens eine Nut (7, 8) in ihrer Form und Lage beeinflusst werden, wobei Teilbereiche mit martensitischem Gefüge (6) auf den Reibflächen (4, 4') durch Materialaussparungen in den beiden Reibringscheiben (3, 3') auf der Seite der Belüftungskanäle (5) erzeugt werden, indem die Dicke der Reibringscheiben (3, 3') in den Teilbereichen (6) vermindert wird.

2. Bremsscheibe nach Anspruch 1, **dadurch gekennzeichnet, dass** die Teilbereiche mit martensitischem Gefüge (6) auf den Reibflächen (4, 4') der beiden Reibringscheiben (3, 3') durch mindestens eine Nut (7) in mindestens einer Reibringscheibe (3, 3') erzeugt werden, welche auf der Seite der Belüftungskanäle (5) in Umfangsrichtung verläuft.

3. Bremsscheibe nach den Ansprüchen 1 und 2, **dadurch gekennzeichnet, dass** der Verlauf der mindestens einen in Umfangsrichtung verlaufenden Nut (7) sich vorzugsweise spiralförmig nach außen erweitert.

4. Bremsscheibe nach einem der Ansprüche 1 bis 3, **dadurch gekennzeichnet, dass** die Teilbereiche mit martensitischem Gefüge (6) auf den Reibflächen (4, 4') der beiden Reibringscheiben (3, 3') durch mehrere radial verlaufende Nuten (8) auf der Seite der Belüftungskanäle (5) in mindestens einer Reibringscheibe (3, 3') erzeugt werden.

5. Bremsscheibe nach einem der Ansprüche 1 bis 4, **dadurch gekennzeichnet, dass** über den Verlauf einer Nut (7, 8) deren Tiefe bzw. die Dicke der Reibringscheibe (3, 3') im Bereich der Nut variabel ist.

6. Bremsscheibe nach einem der Ansprüche 4 oder 5, **dadurch gekennzeichnet, dass** die radial verlaufenden Nuten (8) vorzugsweise versetzt zueinander auf den beiden Reibringscheiben (3, 3') angebracht sind, **dadurch** ein wellenförmiger Kraftverlauf über die Verbindungsbereiche (2) in Umfangsrichtung sichergestellt ist, wobei die Wellenscheitel abwechselnd mit einer der Reibringscheiben (3, 3') verbunden sind, und dass dieser Kraftverlauf vorzugsweise mit einer bekannten, wellenförmig verlaufenden Anbindung (9) der Reibringscheiben (3, 3') an den Scheibentopf (1) kombiniert ist.

7. Bremsscheibe nach einem der Ansprüche 1 bis 6, **dadurch gekennzeichnet, dass** die Teilbereiche mit unterschiedlichen Gefügen (6) auf den Reibflächen (4, 4') der beiden Reibringscheiben (3, 3') durch Wärmebehandlung erzeugt und wahlweise zusätzlich durch die Gestaltung der Verbindungsbereiche (2) und der Belüftungskanäle (5) in ihrer Form und Lage beeinflusst werden.

8. Bremsscheibe nach einem der Ansprüche 1 bis 7, **dadurch gekennzeichnet, dass** die Teilbereiche mit unterschiedlichen Gefügen (6) auf den Reibflächen (4, 4') der beiden Reibringscheiben (3, 3') durch Wärmebeaufschlagung im Betrieb entstehen und insbesondere durch die Gestaltung der Verbindungsbereiche (2) und der Belüftungskanäle (5) beeinflusst werden.

9. Bremsscheibe nach einem der Ansprüche 1 bis 8, **dadurch gekennzeichnet, dass** auf den Reibflächen (4, 4') der beiden Reibringscheiben (3, 3') ein Netz aus Teilbereichen mit martensitischem Gefüge (6) erzeugt wird.

10. Bremsscheibe nach einem der Ansprüche 1 bis 9, **dadurch gekennzeichnet, dass** die Abstände zwischen Teilbereichen mit martensitischem Gefüge (6) und/oder deren Erstreckung auf einer Reibfläche (4, 4') so gewählt sind, dass ein Bremsbelag auf diesen Teilbereichen (6) gleitet.

11. Bremsscheibe nach einem der Ansprüche 1 bis 10, **dadurch gekennzeichnet, dass** die Teilbereiche mit unterschiedlichen Gefügen (6) auf den Reibflächen (4, 4') der beiden Reibringscheiben (3, 3') als Erstarrungsgefüge bei zwei aufeinander folgenden Gießvorgängen entstehen, wenn im ersten Gießvorgang ein Grundkörper mit martensitischem Gefüge hergestellt und im zweiten Gießvorgang die übrigen Bereiche der Reibringscheiben (3, 3') formschlüssig daran angegossen werden.

12. Bremsscheibe nach einem der Ansprüche 1 bis 11, **dadurch gekennzeichnet, dass** im Bereich der Reibflächen (4, 4') der beiden Reibringscheiben (3, 3') je mindestens ein ringförmiger Körper mit martensitischem Gefüge eingegossen ist.

13. Bremsscheibe nach einem der Ansprüche 1 bis 12,**dadurch gekennzeichnet, dass** die Teilbereiche mit martensitischem Gefüge (6) auf den Reibflächen (4, 4') der beiden Reibringscheiben (3, 3') durch mindestens in Teilbereichen wirksame Umschmelzverfahren erzeugt werden.

14. Bremsscheibe nach einem der Ansprüche 1 bis 13, **dadurch gekennzeichnet, dass** die Teilbereiche mit martensitischem Gefüge (6) auf den Reibflächen (4, 4') der beiden Reibringscheiben (3, 3') durch mindestens ein in Teilbereichen in den Reibringscheiben (3, 3') eingegossenes Blech und/oder Drahtgewebe erzeugt werden.

15. Bremsscheibe nach einem der Ansprüche 1 bis 14, **dadurch gekennzeichnet, dass** mindestens ein eingegossenes Blech Abkantungen und/oder Durchstellungen aufweist.

16. Bremsscheibe nach einem der Ansprüche 14 oder 15, **dadurch gekennzeichnet, dass** Durchbrechungen des eingegossenen Bleches und/oder Drahtgewebes vorzugsweise mit freien Querschnitten in den Belüftungskanälen (5) korrespondieren und außerhalb der Verbindungsbereiche (2) angeordnet sind.

17. Bremsscheibe nach einem der Ansprüche 1 bis 16, **dadurch gekennzeichnet, dass** die Teilbereiche mit martensitischem Gefüge (6) auf den Reibflächen (4, 4') durch Materialaussparungen in den beiden Reibringscheiben (3, 3') in Kombination mit Materialanhäufungen in den Verbindungsbereichen (2) erzeugt werden, indem die Wärmeabfuhr beeinflusst wird.

## Claims

1. Internally ventilated brake disc consisting of cast iron for disc brakes of vehicles, consisting of a disk pot (1), of two friction-ring discs (3, 3') connected to the disc pot (1) and having connection regions (2) and of ventilation ducts (5) arranged between them, the friction surfaces (4, 4') of the two friction-ring discs (3, 3') being divided into part-regions with different structures (6), **characterized in that** these part-regions (6) on the friction surfaces (4, 4') arise as solidification structures during the casting operation and are influenced in their form and position by the configuration of the connection regions (2) and of the ventilation ducts (5) or by at least one groove (7, 8), the part-regions with a martensitic structure (6) being generated on the friction surfaces (4, 4') by material clearances in the two friction-ring discs (3, 3') on the side of the ventilation ducts (5), **in that** the thickness of the friction-ring discs (3, 3') is reduced in the part-regions (6).

2. Brake disc according to Claim 1, **characterized in that** the part-regions with a martensitic structure (6) are generated on the friction surfaces (4, 4') of the two friction-ring discs (3, 3') by at least one groove (7) in at least one friction-ring disc (3, 3'), the said groove running in the cicumferential direction on the side of the ventilation ducts (5).

3. Brake disc according to Claims 1 and 2, **characterized in that** the profile of the at least one groove (7) running in the circumferential direction widens preferably spirally outwards.

4. Brake disc according to one of Claims 1 to 3, **characterized in that** the part-regions with a martensitic structure (6) are generated on the friction surfaces (4, 4') of the two friction-ring discs (3, 3') by a plurality of radially running grooves (8) in at least one friction-ring disc (3, 3') on the side of the ventilation ducts (5).

5. Brake disc according to one of Claims 1 to 4, **characterized in that**, over the profile of a groove (7, 8), the depth of the latter or the thickness of the friction-ring disc (3, 3') in the region of the groove is variable.

6. Brake disc according to one of Claims 4 or 5, **characterized in that** the radially running grooves (8) are formed, preferably offset to one another, on the two friction-ring discs (3, 3') thereby ensuring a wavy force profile over the connection regions (2) in the cicumferential direction, the wave crests being connected alternately to one of the friction-ring discs (3, 3'), and **in that** this force profile is preferably combined with a known wavily running tie-up (9) of the friction-ring discs (3, 3') to the disc pot (1).

7. Brake disc according to one of Claims 1 to 6, **characterized in that** the part-regions with different structures (6) are generated on the friction surfaces (4, 4') of the two friction-ring discs (3, 3') by heat treatment and are selectively influenced in their form and position additionally by the configuration of the connection regions (2) and of the ventilation ducts (5) .

8. Brake disc according to one of Claims 1 to 7, **characterized in that** the part-regions with different structures (6) arise on the friction surfaces (4, 4') of the two friction-ring discs (3, 3') as a result of the action of heat during operation and are influenced, in particular, by the configuration of the connection regions (2) and of the ventilation ducts (5).

9. Brake disc according to one of Claims 1 to 8, **characterized in that** a network of part-regions with a martensitic structure (6) is generated on the friction surfaces (4, 4') of the two friction-ring discs (3, 3').

10. Brake disc according to one of Claims 1 to 9, **characterized in that** the spacings between the part-regions with a martensitic structure (6) and/or their extent on a friction surface (4, 4') are selected such that a brake lining slides on these part-regions (6).

11. Brake disc according to one of Claims 1 to 10, **characterized in that** the part-regions with different structures (6) arise on the friction surfaces (4, 4') of the two friction-ring discs (3, 3') as solidification structures during two successive casting operations when, in the first casting operation, a basic body with a martensitic structure is produced and, in the second casting operation, the remaining regions of the friction-ring discs (3, 3') are cast with a form fit onto it.

12. Brake disc according to one of Claims 1 to 11, **characterized in that** at least one annular body with a martensitic structure is cast in in each case in the region of the friction surfaces (4, 4') of the two friction-ring discs (3, 3').

13. Brake disc according to one of Claims 1 to 12, **characterized in that** the part-regions with a martensitic structure (6) are generated on the friction surfaces (4, 4') of the two friction-ring discs (3, 3') by means of remelting methods active at least in part-regions.

14. Brake disc according to one of Claims 1 to 13, **characterized in that** the part-regions with a martensitic structure (6) are generated on the friction surfaces (4, 4') of the two friction-ring discs (3, 3') by means of at least one metal sheet and/or wire fabric cast in in part-regions in the friction-ring discs (3, 3') .

15. Brake disc according to one of Claims 1 to 14, **characterized in that** at least one cast-in metal sheet has bends and/or passages.

16. Brake disc according to one of Claims 14 or 15, **characterized in that** perforations of the cast-in metal sheet and/or wire fabric preferably match with free cross sections in the ventilation ducts (5) and are arranged outside the connection regions (2).

17. Brake disc according to one of Claims 1 to 16, **characterized in that** the part-regions with a martensitic structure (6) are generated on the friction surfaces (4, 4') by material clearances in the two friction-ring discs (3, 3'), in combination with material accumulations in the connection regions (2), **in that** the discharge of heat is influenced.

## Revendications

1. Disque de frein à ventilation intérieure en fonte pour des freins à disques de véhicule, comprenant un moyeu en forme de pot (1) avec deux disques annulaires de friction (3, 3') reliés au moyeu (1) par des zones de liaison (2) et des canaux de ventilation (5) intermédiaires, les surfaces de friction (4, 4') des deux disques à anneaux de friction (3, 3') étant décomposés en zones partielles avec des structures (6) différentes,
**caractérisé en ce que**
les zones partielles (6) sont formées sur les surfaces de friction (4, 4') comme structure de solidification de coulée et par la mise en forme des zones de liaison (2) et des canaux de ventilation (5) ou par au moins une rainure (7, 8) dont on influence la forme et la position,
des zones partielles à structure martensitique (6) sur les surfaces de friction (4, 4') étant réalisées par des dégagements de matière dans les deux disques à anneaux de friction (3, 3') du côté des canaux de ventilation (5) en réduisant l'épaisseur des disques à anneau de friction (3, 3') dans les zones partielles (6).

2. Disque de frein selon la revendication 1,
**caractérisé en ce que**
les zones partielles à structure martensitique (6) sur les surfaces de friction (4, 4') des deux disques à anneau de fiction (3, 3') sont réalisés par au moins une rainure (7) dans au moins un disque à anneau de friction (3, 3') et passant dans la direction périphérique sur le côté des canaux de ventilation (5).

3. Disque de frein selon les revendications 1 et 2,
**caractérisé en ce que**
le tracé d'au moins une rainure (7) dans la direction périphérique s'élargit vers l'extérieur, de préférence suivant une forme de spirale.

4. Disque de frein selon l'une des revendications 1 à 3,
**caractérisé en ce que**
les zones partielles à structure martensitique (6) sur les surfaces de friction (4, 4') des deux disques à anneaux de friction (3, 3') sont réalisées par plusieurs rainures radiales (8) sur le côté des canaux de ventilation (5) dans au moins l'un des disques à anneaux de friction (3, 3').

5. Disque de frein selon l'une des revendications 1 à 4,
**caractérisé en ce que**
par le tracé d'une rainure (7, 8), on varie sa profondeur ou l'épaisseur du disque à anneau de friction (3, 3') dans la zone de la rainure.

6. Disque de frein selon l'une des revendications 4 ou 5,
**caractérisé en ce que**
les rainures radiales (8) sont de préférence décalées l'une par rapport à l'autre sur les deux disques à anneau de friction (3, 3') **en ce qu'**une transmission de force, de tracé ondulé est ainsi garantie par les zones de liaison (2) dans la direction périphérique, les sommets des ondulations étant reliés alternativement à l'un des disques de friction (3, 3') et cette transmission de la force est de préférence combinée à une liaison connue, qui s'effectue suivant une forme ondulée (9) des disques à anneaux de friction (3, 3') du moyeu de disque (1).

7. Disque de frein selon l'une des revendications 1 à 6,
**caractérisé en ce que**
les zones partielles à structures différentes (6) sur les surfaces de friction (4, 4') des deux disques à anneau de friction (3, 3') sont obtenues par traitement thermique et sélectivement en plus, par la forme donnée aux zones de liaison (2) et aux canaux de ventilation (5) influencés dans leur forme et dans leur position.

8. Disque de frein selon l'une des revendications 1 à 7,
**caractérisé en ce que**
les zones partielles à structures différentes (6) sur les surfaces de friction (4, 4') des deux disques à anneau de friction (3, 3') sont obtenues par application de chaleur pendant le fonctionnement et notamment elles sont influencées par la forme donnée aux zones de liaison (2) et aux canaux de ventilation (5).

9. Disque de frein selon l'une des revendications 1 à 8,
**caractérisé en ce qu'**
on réalise un réseau de zones partielles à structure martensitique (6) sur les surfaces de friction (4, 4') des deux disques à anneau de friction (3, 3').

10. Disque de frein selon l'une des revendications 1 à 9,
**caractérisé en ce qu'**
on choisit les distances entre les zones partielles à structure martensitique (6) et/ou leur extension sur une surface de friction (4, 4') pour qu'une garniture de frein glisse sur ces zones partielles (6).

11. Disque de frein selon l'une des revendications 1 à 10,
**caractérisé en ce que**
les zones partielles à structures différentes sur les surfaces de friction (4, 4') des deux disques à anneau de friction (3, 3') sont des réseaux obtenus par figeage lors de deux phases de coulée successives lorsqu'au cours d'une première coulée on réalise un corps de base à réseau martensitique dans une seconde opération de coulée on coule avec une liaison de forme les autres zones des disques à anneau de friction (3, 3').

12. Disque de frein selon l'une des revendications 1 à 11,
**caractérisé en ce que**
dans la zone des surfaces de friction (4, 4') des deux disques annulaires de friction (3, 3') on coule chaque fois au moins un corps annulaire à structure martensitique.

13. Disque de frein selon l'une des revendications 1 à 12,
**caractérisé en ce qu'**
on forme les zones partielles à structure martensitique (6) sur les surfaces de friction (4, 4') des deux disques à anneau de friction (3, 3') par un procédé de transformation par fusion agissant au moins dans les zones partielles.

14. Disque de frein selon l'une des revendications 1 à 13,
**caractérisé en ce qu'**
on réalise les zones partielles à structure martensitique (6) sur les surfaces de friction (4, 4') des deux disques à anneaux de friction (3, 3') par au moins une tôle et/ou un tissu de fils de fer noyés dans des zones partielles des disques à anneaux de friction (3, 3').

15. Disque de frein selon l'une des revendications 1 à 14,
**caractérisé en ce qu'**
au moins une tôle noyée par coulée présente des arêtes rabattues et/ou des zones de passage.

16. Disque de frein selon l'une des revendications 14 ou 15,
**caractérisé en ce que**
les zones de passage de la tôle noyée et/ou le tissu de fils de fer correspondent de préférence par des sections libres aux canaux de ventilation (3) et se trouvent à l'extérieur des zones de liaison (2).

17. Disque de frein selon l'une des revendications 1 à 16,
**caractérisé en ce que**
les zones partielles à structure martensitique (6) sur les surfaces de friction (4, 4') sont réalisées par des dégagements de matière dans les deux disques à anneau de friction (3, 3') en combinaison avec des accumulations de matière dans les zones de liaison (2) en influençant l'évacuation de la chaleur.
